# EUROPEAN PATENT SPECIFICATION

(11) **EP 1 442 834 B1**
(45) Date of publication and mention of the grant of the patent: **22.11.2006**
(21) Application number: 04002067.9
(22) Date of filing: 30.01.2004
(51) Int. Cl.: B23Q 11/06, B27B 13/04, B23D 59/00, B23Q 11/00, B27B 5/38, F16P 3/12, F16P 3/14

(54) **Machine safety protection system**
Sicherungssystem für Maschinen
Systeme pour la sécurité de machines

(30) Priority: 31.01.2003 US 444263 P
(43) Date of publication of application: 04.08.2004
(73) Proprietor: Techtronic Industries Co., Ltd., New Territories, Hong Kong (CN)
(72) Inventor: Minalga, Philip F., Pendleton, SC 29670 (US); Dils, Jeffrey M., Simpsonville, SC 29681 (US); Buck, William, Clemson, SC 29631 (US)
(74) Representative: HOFFMANN EITLE

(56) References cited:
- WO-A-03/006213
- US-A1- 2002 017 176
- US-A1- 2003 015 253
- US-A1- 2003 020 336

## Description

The present invention relates to a safety system for a machine, particularly for a tool having a moving blade. The present invention also relates to a system to detect when a human is in close proximity to a dangerous area of the tool.

### BACKGROUND OF THE INVENTION

Machines and particularly power tools having moving parts are prevalent. Safety of the user is a paramount concern, especially when the power tool contains a moving blade, such as a saw (table saw, cut saw, chop saw, miter saw, band saw, etc.) As noted saws include blades that can move down onto or across a workpiece to cut the workpiece. Other saws include stationary blades that require the user to move a workpiece past the blade to make a cut. For example, a user of a radial arm saw draws the blade toward him as he cuts workpiece. The user typically holds the workpiece with one hand white operating the saw with his other hand. In addition, the user of a bandsaw typically uses one or both hands to slide a workpiece across a surface and past the active blade in order to cut the workpiece. Each of these situations pose the risk of direct bodily contact with a blade that can cause serious injury.

Therefore, there is a need for a device or method to address this risk. One solution is proposed in US Pat. Appln. Pub. 2002/0017176 and a number of related published applications. These published applications describe a system to detect contact between the moving blade of a tool and the user and, as a result of the detecting, the motion of the blade is stopped. Although this is helpful, close proximity to a blade can pose a risk of injury. The user's clothes can be caught in the blade, or a user can be struck by the workpiece if the saw is used improperly. Therefore, there is a need for an apparatus and/or system to detect when a user is in close proximity to to the blade or a portion of the tool other than the blade such that motion of the blade can be stopped when such close proximity is detected. A system according to the preamble of claim 1 is known from US-A-3785230. From WO 03/006213 it is known to detect by a capacitance sensor the capacitance of the user.

### SUMMARY OF THE INVENTION

In accordance with the present invention, a system as claimed in claim 1 is provided to detect whether a user, and in particular, a portion of the user's body is in close proximity to either the blade of a power tool or to a portion of the power tool such that when the close proximity is detected, the motion of the blade is stopped.

In another embodiment of the present invention, a machine for cutting a workpiece is provided. The machine includes the features of claim 24.

In another aspect of the present invention, a method of minimizing the risk of injury to a user of a cutting tool is provided. The method includes the steps recited in claim 30.

### BRIEF DESCRIPTION OF THE DRAWINGS

FIG. 1 is a schematic block diagram of one embodiment of the machine safety system of the present invention.

FIG. 2 is a schematic diagram of one embodiment of the safety system in the context of a power saw.

FIG. 3 is a diagram of a digital capacitive circuit useful in the safety system of the present invention.

FIG. 4 is a circuit diagram of a motor that incorporates features of the safety system of the present invention and showing the motor in the normal run mode.

FIG. 5 is a circuit diagram of a motor that incorporates features of the safety system of the present invention and showing the motor in a stopped or "off" position.

FIG. 6 is a portion of a circuit diagram that incorporates features of the safety system of the present invention being implemented on a miter saw and showing the miter saw in a stopped or "off" position.

FIG. 7 is a portion of a circuit diagram that incorporates features of the safety system of the present invention being implemented on a miter saw and showing the miter saw in a stopped or "off" position.

FIG. 8 is a portion of a circuit diagram that incorporates features of the safety system and shows the state when the motor is commutated (i.e., when the amplifier circuit reverses the circuit in the motor to decelerate the motor).

FIG. 9 is an exemplary process control board and a portion of a circuit to be connected with the board where the circuit incorporates features of the safety system.

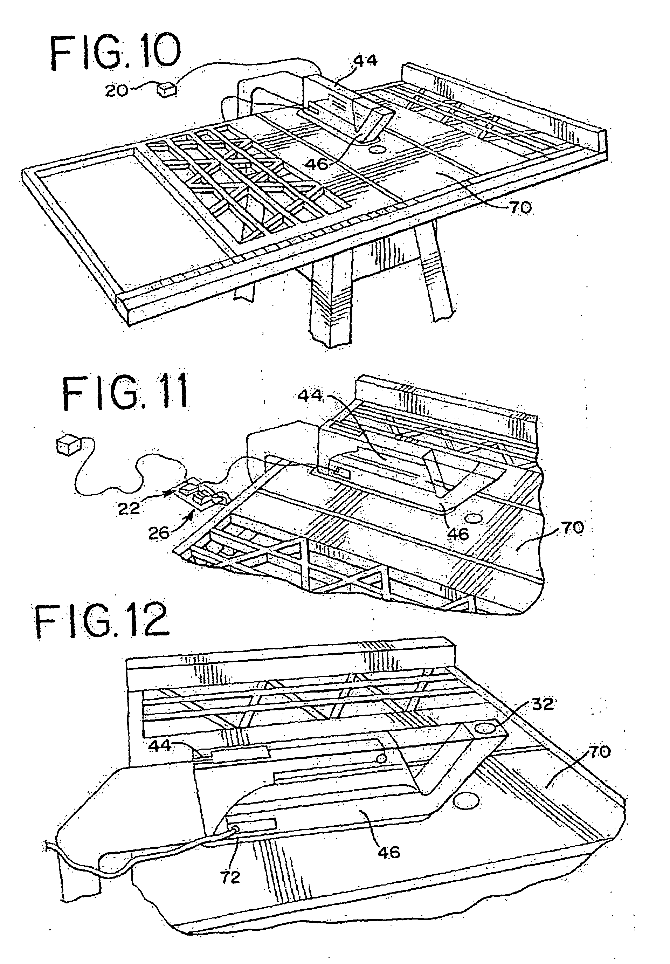

FIG. 10 perspective view of one embodiment of a machine according to the present invention and in particular, a perspective view of a table saw that incorporates features of the safety system.

FIG. 11 is a side view of a table saw that includes a protective barrier and a capacitive probe mounted on a portion of the barrier. The figure also shows a portion of the safety system and, in particular, the circuit board with the housing removed to better show the components.

FIG. 12 is a side perspective view of a table saw that includes a protective barrier and a capacitive probe mounted on a portion of the barrier.

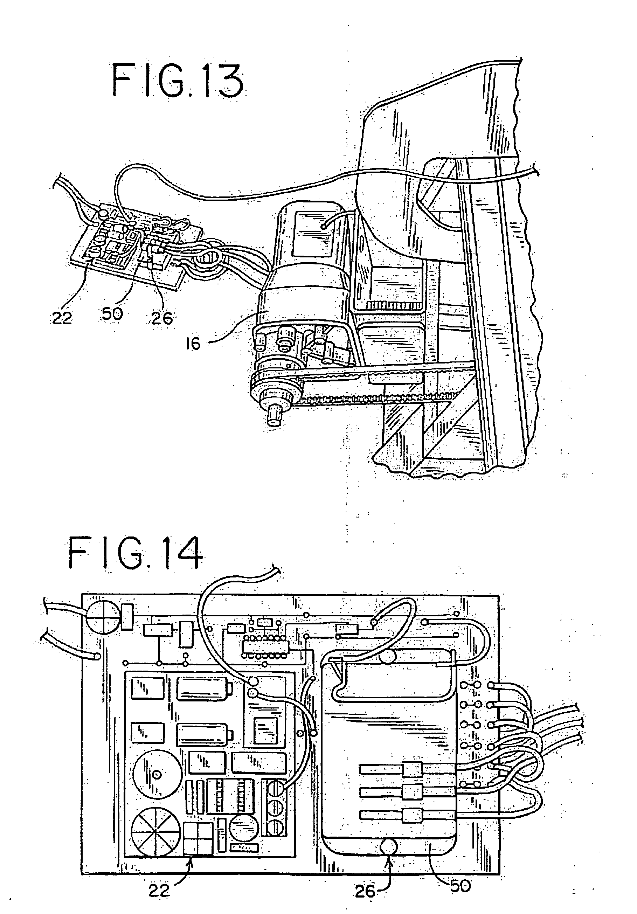

FIG. 13 is a perspective view of a motor to drive a blade with a portion of the motor housing removed to show the connection of the motor with a portion of the safety system and, in particular, the circuit board with the housing removed to better show the components.

FIG. 14 shows a portion of the safety system and, in particular, the circuit board with the housing removed to better show the components.

### DESCRIPTION OF THE INVENTION

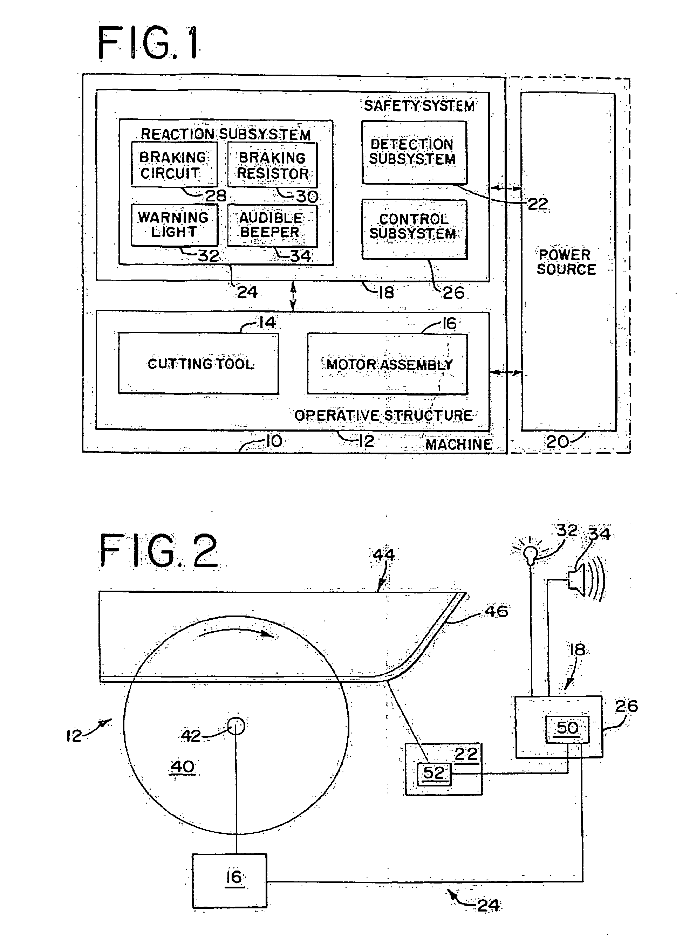

A machine that may incorporate a safety system according to the present invention is shown schematically in FIG. 1 and indicated generally at 10. The machine 10 may be any of a variety of different machines adapted for cutting workpieces, such as wood, including a table saw, miter saw, radial arm saw, circular saw, band saw, jointer, planer, etc. The machine 10 includes an operative structure 12 having a cutting tool 14 and a motor assembly 16 adapted to drive the cutting tool 14. The machine 10 also includes a safety system 18 configured to minimize the potential of a serious injury to a person using the machine 10. The safety system 18 is adapted to detect the close proximity between a portion of the human body and the cutting tool 14. In particular, the safety system 18 is adapted to detect when the human body is in close proximity to a portion of the cutting tool 14 that is not the blade. The portion of the cutting tool may be a protective barrier 44 provided on a portion of the cutting tool 14. When the safety system detects that a portion of the human is in close proximity to the portion of the cutting tool, the safety system 18 is adapted to stop the motion of the blade such as by disabling the operative structure 12.

The machine 10 includes a suitable power source 20 to provide power to the operative structure 12 and the safety system 18. The power source 20 may be an external power source such as line current, or an internal power source such as a battery. Alternatively, the power source 20 may include a combination of both external and internal power sources. Furthermore, the power source 20 may include two or more separate power sources, each adapted to power different portions of the machine 10.

It will be appreciated that the operative structure 12 may take any one of many different forms, depending on the type of machine 10. For example, the operative structure 12 may include a stationary housing configured to support a motor assembly 16 in driving engagement with a cutting tool 14. Alternatively, the operative structure 12 may include a movable structure configured to carry a cutting tool 14 between multiple operating positions. As a further alternative, the operative structure 12 may include one or more transport mechanisms adapted to convey a workpiece toward and/or away from the cutting tool 14.

The motor assembly 16 includes one or more motors adapted to drive the cutting tool 14. The motor assembly 16 may be either directly or indirectly coupled to the cutting tool, and may also be adapted to drive workpiece transport mechanisms. The cutting tool 14 typically includes one or more blades or other suitable cutting implements that are adapted to cut or remove portions from the workpieces. The particular form of the cutting tool 14 will vary depending upon the various embodiments of the machine 10. For example, in table saws, miter saws, circular saws and radial arm saws, the cutting tool 14 will typically include one or more circular rotating blades having a plurality of teeth disposed along the edge of the blade. For a jointer or planer, the cutting tool typically includes a plurality of radially spaced-apart blades. For a band saw, the cutting tool includes an elongate, circuitous tooth-edged band. It can be appreciated by one skilled in the art that the safety system 18 of the present invention can be used in conjunction with any type of power saw used for cutting. Furthermore, the safety system 18 can be easily retrofitted onto machines not previously having such a system.

The safety system 18 includes a detection subsystem 22, a reaction subsystem 24, and a control subsystem 26. The control subsystem 26 may be adapted to receive inputs from a variety of sources including the detection subsystem 22, the reaction subsystem 24, the operative structure 12, and the motor assembly 16. The control subsystem 26 may also include one or more sensors adapted to monitor selected parameters of the machine 10. In addition, control subsystem 26 typically includes one or more instruments operable by a user to control the machine. The control subsystem is configured to control the machine 10 in response to the inputs it receives.

Detection subsystem 22 is configured to detect when the human body is in danger of injury during use of the machine 10. When such is detected, the detection subsystem 22 creates an output detection signal. For example, the detection subsystem 22 may be configured to detect when a user's hand is extremely close to a cutting blade 40. In another example, the detection subsystem 22 may be configured to detect the rapid movement of a workpiece due to kickback by the cutting tool. In some embodiments, the detection subsystem 22 may inform the control subsystem 26 of the dangerous condition, which then activates reaction subsystem 24. In other embodiments, the detection subsystem 22 may be adapted to activate the reaction subsystem 24 directly. In accordance with the present invention, close proximity between the user and the protective barrier 44 is detected.

Once activated in response to a dangerous condition, reaction subsystem 24 is configured to disable the operative structure 12 quickly to prevent serious injury to the user. The reaction subsystem 24 may be configured to do one or more of the following: stop the movement of cutting tool 14, disconnect motor assembly 16 from power source 20, retract the cutting tool from its operating position, reverse the current in the motor assembly 16, or the like. The reaction subsystem may be configured to take a combination of steps to protect the user from serious injury. It can be appreciated by one skilled in the art that the reaction subsystem can be configured in a variety of ways to prevent or at least minimize the likelihood of injury to the user.

The configuration of the reaction subsystem 24 will vary depending on which action(s) are taken. In the preferred embodiment depicted in FIG. 1, the reaction subsystem 24 is configured to stop the movement of the cutting tool 14 as well as provide warning to the user, and includes a braking circuit 28, braking resistor 30, warning light 32, and an audible beeper 34. The braking circuit is adapted to disable the operative structure 12 by inserting a braking resistor 30 in series with the armature coil of the motor assembly 16. During operation of machine 10, there is no added resistance impeding the flow of current through the armature coil of the motor assembly 16. However, when an activation signal is received by the reaction subsystem 24, the warning light 32, audible beeper 34, and the braking circuit 28 are activated. When activated, the braking resistor 30 resists the current that induces electromotive force to the motor assembly 16, thereby stopping the cutting tool 14.

It will be appreciated by those of skill in the art that the preferred embodiment depicted in FIG. 1 and described above may be implemented in a variety of ways depending on the type and configuration of operative structure 12. In FIG. 2, one example of the many possible implementations of safety system 18 is shown. System 18 is configured to disable an operative structure 12 having a cutting blade 40, in the form of a circular blade, mounted on a rotating shaft or arbor 42. Blade 40 includes a plurality of cutting teeth (not shown) disposed around the outer edge of the blade.

In the preferred embodiment, the safety system 18 includes a blade guard located substantially adjacent to the cutting blade 40, and a warning signal sufficient to warn the user of a possibility of injury. Blade guards 44 are generally made of a transparent plastic or polymeric material, and are placed in a position to protect the user from contacting the cutting blade 40 as well as a means of containing splinters from the cutting process. Blade guards 44 act as barriers between the exposed blade 40 and the user, so as to prevent contact between a body part and a moving blade 40. Often, blade guards 44 are moveable, and can provide the user with direct access to the blade or the throat plate 72.

Throat plates 72 are also used to minimize a user's exposure to a cutting blade 40. A throat plate 72 is generally located atop a working surface 70, and the cutting blade 40 is inserted from the bottom of the working surface 70 and through the throat plate. The throat plate 72 acts to expose only enough of the cutting blade 40 to fully cut a workpiece, and also to provide lateral support to the cutting blade 40 so as to prevent the blade from bending. When the blade of a power saw bends, the cut is not precise, and can lead to kickback from a workpiece.

It can be understood by one skilled in the art that the safety system 18 can have a variety of configurations sufficient to prevent direct contact between the user and a moving blade.

Detection subsystem 22 is configured to detect when the human body is in danger of injury during use of the machine 10. When such is detected, the detection subsystem 22 is activated. For example, the detection subsystem 22 may be configured to detect when a user's hand is extremely close to a cutting blade 40. In another example, the detection subsystem 22 may be configured to detect the rapid movement of a workpiece due to kickback by the cutting tool. In some embodiments, the detection subsystem 22 may inform the control subsystem 26 of the dangerous condition, which then activates reaction subsystem 24. In other embodiments, the detection subsystem 22 may be adapted to activate the reaction subsystem 24 directly.

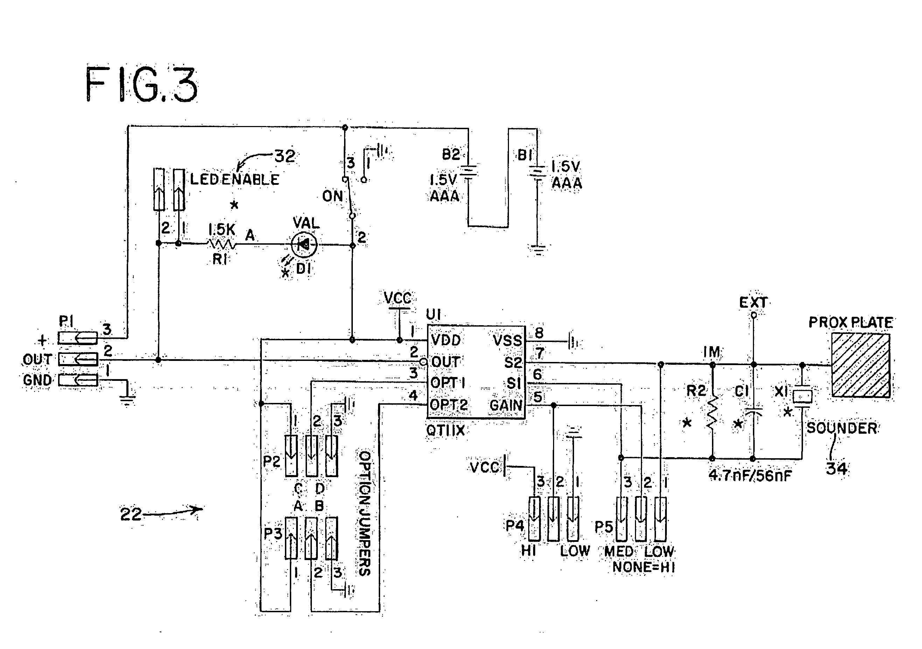

The preferred embodiment of the detection subsystem 22 has a sensor 46 coupled to the blade guard 44. The sensor 46 is preferably a metal strip adhered to the inside and/or outside surface of the blade guard 44 near the edge of the blade guard adjacent to the working surface 70. The sensor 46 is connected to a digital capacitive circuit 52. An example of such a circuit is the Qprox manufactured by Quantum Research Group, as shown in FIG. 3. The combination of the digital capacitive circuit 52 and the sensor 46 creates a capacitive probe which searches for a particular capacitance level. The level and sensitivity of the capacitive probe is adjustable by gain adjustments in the digital capacitive circuit. Preferably, the capacitive probe is set to sense when a human is extremely close to or in contact with the sensor 46, the blade 40, a throat plate 72, or any other dangerous area surrounding the blade 40. The sensitivity of the digital capacitive circuit 52 should be set to detect a capacitance of about 100 picofarads, which is the capacitance created by human contact with, or a body part in close proximity to, a sensor 46. The detection subsystem 22 is capable of sensing the proximity or contact of a human with the sensor 46, regardless of whether or not the user is wearing protective gloves or the like. When human contact or close proximity with a dangerous area is detected, a detection signal is output to the control system 26.

It can be understood to those skilled in the art that the detection subsystem 22 can have a variety of configurations capable of detecting when the user is either in contact or close proximity to a dangerous area of the machine 10, including the blade guard 44, blade 40, throat plate 72, or another surface near the blade 40. In accordance with the invention, however, close proximity between the user and the blade guard 44 is detected. It can be further understood by those skilled in the art that the sensors 46 can be made of any material sufficient to detect a situation in which the user is either in close proximity or in direct contact with the blade, blade guard, or other dangerous area near the blade.

The control subsystem 26 includes one or more instruments (not shown) that are operable by a user to control the blade 40. The instruments may include start/stop switches, speed controls, direction controls, etc. Control subsystem 26 also includes a logic controller 50 connected to receive the user's inputs via the various instruments. Logic controller 50 is also connected to receive a detection signal from detection subsystem 22. Further, the logic controller 50 may be configured to receive inputs from other sources (not shown) such as blade motion sensors, workpiece sensors, etc. In any event, the logic controller 50 is configured to control the operative structure 12. However, upon receipt of a detection signal from detection subsystem 22, the logic controller 50 can cause the reaction subsystem 24 to activate an audible beeper 34, a warning light 32, disable the blade 40, or a combination thereof. It can be recognized by one skilled in the art that there are a variety of actions sufficient to either provide the user with a warning signal or to disable the cutting blade.

The preferred embodiment of the control subsystem 26 involves disabling the cutting blade 40 upon receipt of a detection signal from the detection subsystem 22 in which a user is in close proximity or in contact with the blade 40, blade guard 46, throat plate 72, or any other dangerous area near the blade 40. The control subsystem 26 contains a logic controller 50 which is adapted to receive multiple inputs. The logic controller 50 has a predetermined response to the inputs received. In particular, the logic controller 50 will activate various features of the reaction subsystem 24 depending on the detection signal received from the detection subsystem 22. In one embodiment of the control subsystem 26, an output signal or series of signals activates at least one element within the reaction subsystem 24.

In another embodiment of the control subsystem 26, when a detection signal is received from the detection subsystem 22, electrical power to the motor 16 is disconnected. Without power to run the motor, the blade will be disabled. In a further embodiment, the control subsystem 26 includes an amplifier circuit designed to cause a commutation of the motor. In other words, the current supplied to the motor 16 is reversed, thereby decelerating the motor 16 driving the cutting blade 40 rapidly. It can be understood by one skilled in the art that the control subsystem 26 can be configured in a variety of ways sufficient to prevent injury to the user during operation of a power saw.

In the preferred embodiment of the reaction subsystem 24, the signal received from the logic controller 50 can cause the reaction subsystem 24 to disable the cutting blade 40, activate a warning light 32 or audible sound 34, or effectuate any combination thereof rapidly. When the logic controller 50 outputs a signal to the reaction subsystem to activate the braking circuit 28, the braking circuit activates a braking resistor 30 to insert a resistance in series with the armature coil of the motor assembly 16. The logic controller 50 can also send a signal to the reaction subsystem 24 to provide the user with a warning signal that a body part is dangerously close to the blade 40, blade guard 44, throat plate 72, or another dangerous area near the blade 40.

The warning signal can include a warning light 32, an audible sound 34, or any variety of signals that can be sensed by the user to indicate a dangerous condition. A warning light 32 is preferably located on the blade guard 44 in order to produce a visual warning of danger, but can be located at any other location sufficient to provide the user with a visual warning of danger. The warning light 32 can be an LED display which, when activated, displays a textual warning. In another embodiment, the warning light 32 can be a light bulb which is illuminated. In a further embodiment, the warning light 32 can consist of a flashing light. The audible sound 32 provides the user of the power saw with a sufficient auditory warning of a dangerous situation. These warning signals can be activated by the logic controller 50 simultaneously, individually, or consecutively, depending upon the signal received from the logic controller 50. In addition, the operative structure 12 need not be in the operative mode in order for a warning signal to be activated. Thus, even when the motor is off and the blade is stopped, a warning signal can be activated when a user is in close proximity or in contact with the blade 40, blade guard 44, throat plate 72, or any other dangerous area in the vicinity of the cutting blade 40. It can be appreciated to one skilled in the art that a variety of warning signal(s) can be used to provide the user with a warning sufficient for the user to appreciate a dangerous condition.

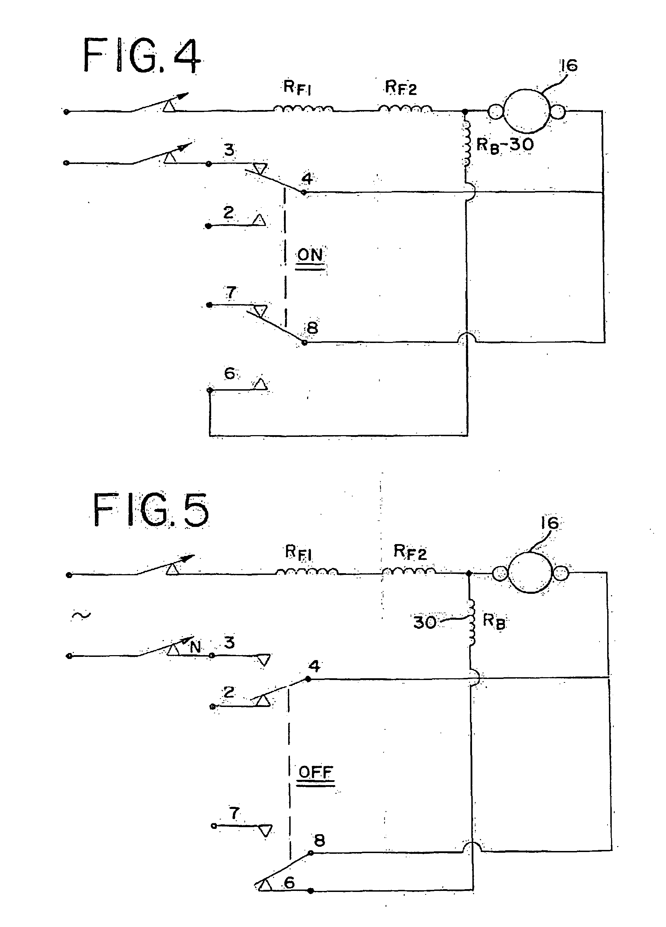

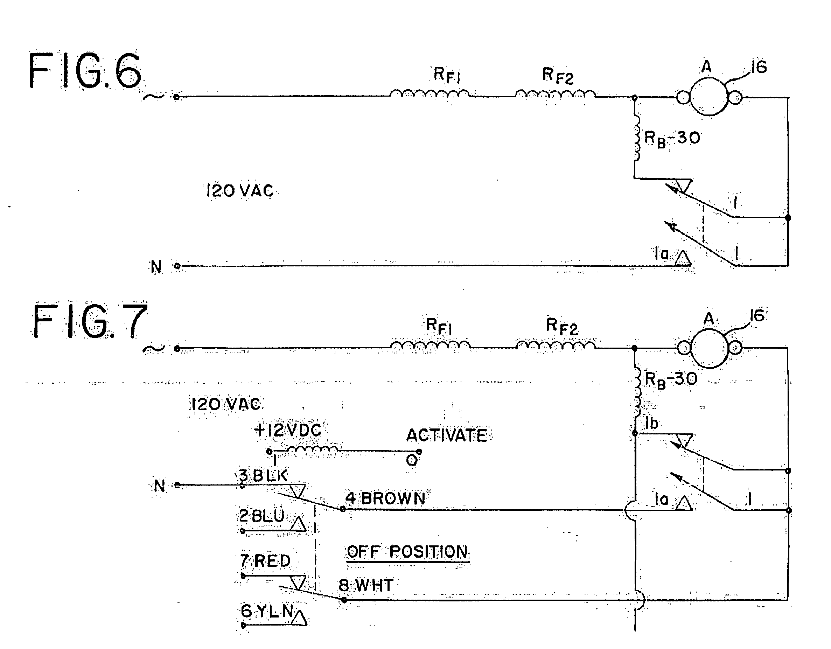

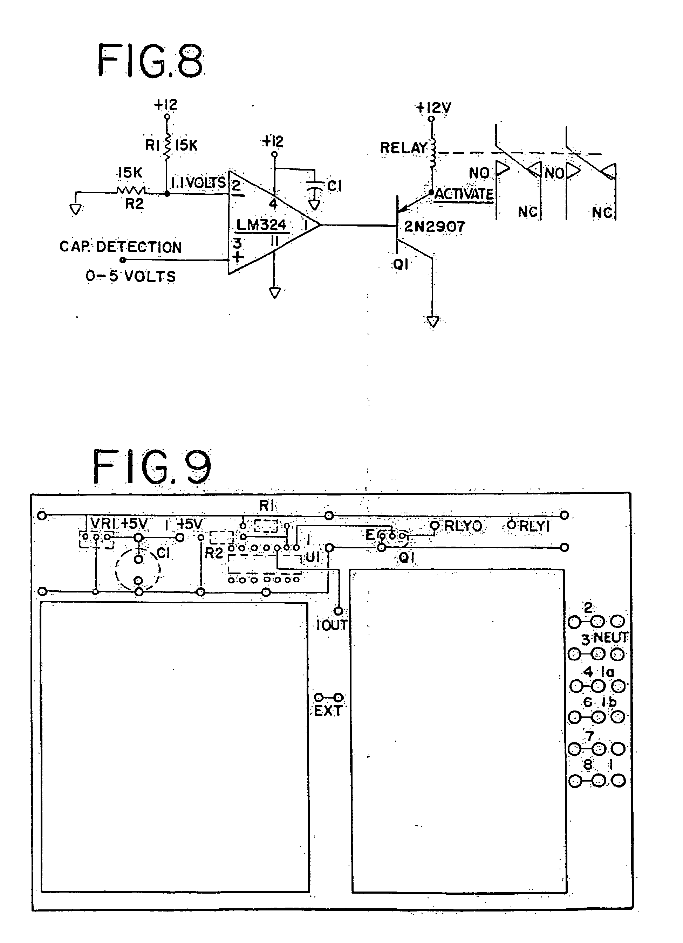

The circuit diagrams of FIGS. 4-9 represent a variety of braking circuits 28 which can be used to disable the blade 40 by effecting the operating condition of the motor 16. For example, FIG. 4 is the preferred embodiment of the circuit for the motor in a normal run mode. When there are no dangers posed by the user, the motor is free to drive a cutting blade. The diagram in FIG. 5 is the result of a detection signal being received by the control subsystem 26. When the detection signal is received from the detection subsystem 22, the circuit to the motor is closed, thereby preventing the motor from driving the blade 40, thereby disabling the operation of the blade 40 almost instantaneously. The circuit diagrams in FIGS. 6 and 7 represent the circuits in combination with a miter saw in the off positions. The circuit diagram of FIG. 8 represents the situation in which the control subsystem 26 receives a detection signal from the detection system 22 indicating the user is in contact or in close proximity to the blade 40, blade guard 44, or any dangerous area near the blade 40. In this embodiment, the control subsystem 26 reverses the electrical current to the motor thereby decelerating the motor at a rapid rate. It can be understood by one skilled that there are a variety of braking circuits sufficient to have an effect on the motor so as to disable the cutting blade. FIG. 9 is a circuit diagram of the board to which the detection subsystem 22 and the control subsystem 26 are mounted and connected.

It is therefore intended that the foregoing detailed description be regarded as illustrative rather than limiting, and that it be understood that it is the following claims, including all equivalents, that are intended to define the scope of this invention.

## Claims

1. A power saw safety system (18) comprising:
a. a motor (16) configured to drive a cutting blade (40),
b. a protective barrier (44) provided between the cutting blade (40) and a user,
c. a detection system (22) arranged and constructed so as to detect the capacitance of the user and, upon detection, output a detecting signal, and
d. a control system (26) receiving the detecting signal,
**characterized in that**
the detection system (22) is coupled such to the protective barrier (44) so as to detect a close proximity between the user and the protective barrier (44).

2. The power saw safety system (18) of claim 1, in which the protective barrier (44) is a blade guard.

3. The power saw safety system (18) of claim 1, in which the protective barrier (44) is a throat plate.

4. The power saw safety system (18) of claim 1, in which the detection system (22) comprises a digital capacitive circuit that senses the capacitance of the user.

5. The power saw safety system (18) of claim 4, in which the digital capacitive circuit is configured to sense a capacitance in the range from about 1 pF to about 500 pF.

6. The power saw safety system (18) of claim 4, in which the digital capacitive circuit is configured to sense a capacitance in the range from about 50 pF to about 200 pF.

7. The power saw safety system (18) of claim 4, in which the digital capacitive circuit is configured to sense a capacitance of about 100 pF.

8. The power saw safety system (18) of claim 4, in which the digital capacitance circuit includes a capacitor selected from the group consisting of ceramic, film, power film, aluminum, and tantalum.

9. The power safety system (18) of claim 1, in which the protective barrier (44) functions as a capacitive probe to search for a selectable capacitance level.

10. The power saw safety system (18) of claim 1, in which the control system (26) is adapted to stop motion of the cutting blade (40) upon receiving the detecting signal.

11. The power saw safety system (18) of claim 1, in which the control system (26) includes a braking resistor operative with the motor (16) to stop motion of the cutting blade (40).

12. The power saw safety system (18) of claim 11, in which the control system (26) is adapted to insert the braking resistor in series with an armature coil of the motor (16), thereby stopping motion of the cutting blade (40).

13. The power saw safety system (18) of claim 1, in which the control system (26) includes an amplifier circuit to reverse current in the motor (16), thereby stopping motion of the cutting blade (40).

14. The power saw safety system (18) of claim 1, in which the control system (26) is adapted to disable the cutting blade (40) when the cutting blade (40) is in an active mode.

15. The power saw safety system (18) of claim 1, in which the control system (26) is adapted to provide a warning signal upon receiving the detecting signal.

16. The power saw safety system (18) of claim 15, in which the warning signal is a light.

17. The power saw safety system (18) of claim 15, in which the warning signal is an audible sound.

18. The power saw safety system (18) of claim 1, in which the control system (26) is adapted to disconnect electrical power to the motor (16).

19. The power saw safety system (18) of claim 1, in which the control system (26) is adapted to move the cutting blade (40) away from a cutting area.

20. The power saw safety system (18) of claim 1, in which the control system (26) is selectively adapted to provide a warning signal, to stop motion of the cutting blade (40), or move the cutting blade (40) away from a cutting area, upon receiving the detecting signal.

21. The power saw safety system (18) of claim 20, in which the control system (26) provides a warning signal and stops motion of the cutting blade (40).

22. The power saw safety system (18) of claim 21, in which the control system (26) simultaneously provides a warning signal and stops motion of the cutting blade (40).

23. The power saw safety system (18) of claim 1, in which upon receiving the detecting signal, the control system (26) is selectively adapted to provide at least two simultaneous actions selected from the group consisting of providing a warning signal, stopping motion of the cutting blade (40), and moving the cutting blade (40) away from a cutting area.

24. A machine (10) for cutting a workpiece comprising a safety system (18) as claimed in any one of claims 1 to 23.

25. The machine (10) of claim 24, in which the motor (16) rotates the cutting tool (14) as the cutting tool (14) moves at least partially into the cutting zone, and where the control system (26) is adapted to stop the rotation of the cutting tool (14).

26. The machine (10) of claim 25, in which the control system (26) includes a first brake mechanism adapted to stop the movement of the cutting tool (14) into the cutting area, and a second brake mechanism adapted to stop the rotation of the cutting tool (14).

27. The machine (10) of claim 24, further comprising an operative structure (12) adapted to couple the cutting tool (14) to the support structure, where the operative structure (12) is selectively movable relative to the support structure to move the cutting tool (14) into the cutting area, and where the control system (26) is adapted to stop movement of the operative structure (12) relative to the support structure upon detection of close proximity by the detection system (22).

28. The machine (10) of claim 24, further comprising a blade guard, wherein the selected portion of the tool (14) is the blade guard.

29. The machine (10) of claim 27, the machine (10) being an up-cut saw, and the control system (26) being adapted to stop upward movement of the operative structure (12).

30. A method of detecting close proximity between a user and a tool (14) having a motor (16) to drive a blade (40) and a protective barrier (44) provided between the cutting blade (40) and a user, wherein the capacitance of the user is detected,
**characterized in that**
a close proximity between the user and said protective barrier (44) is detected by means of a capacitive probe coupled to said protective barrier (44).

## Patentansprüche

1. Sicherheitssystem (18) für eine Elektrosäge, mit:
a. einem Motor (16) zum Antreiben eines Sägeblatts (40) ,
b. einer Schutzbarriere (44) zwischen dem Sägeblatt (40) und einem Benutzer,
c. einem Erfassungssystem (22), das dazu angeordnet und aufgebaut ist, die Kapazitanz des Benutzers zu erfassen und bei der Erfassung ein Erfassungssignal auszugeben, und
d. einem Steuersystem (26), das das Erfassungssignal empfängt,
**dadurch gekennzeichnet, dass**
das Erfassungssystem (22) so mit der Schutzbarriere (44) gekoppelt ist, dass es eine enge Annäherung zwischen dem Benutzer und der Schutzbarriere (44) erfasst.

2. Sicherheitssystem (18) für eine Elektrosäge nach Patentanspruch 1, bei welchem die Schutzbarriere (44) ein Sägeblattschutz ist.

3. Sicherheitssystem (18) für eine Elektrosäge nach Patentanspruch 1, bei welchem die Schutzbarriere (44) eine Platte ist.

4. Sicherheitssystem (18) für eine Elektrosäge nach Patentanspruch 1, bei welchem das Erfassungssystem (22) einen digitalen kapazitiven Schaltkreis aufweist, der die Kapazitanz des Benutzers erfasst.

5. Sicherheitssystem (18) für eine Elektrosäge nach Patentanspruch 4, bei welchem der digitale kapazitive Schaltkreis dazu ausgestaltet ist, eine Kapazitanz im Bereich von ungefähr 1 pF bis ungefähr 500 pF zu erfassen.

6. Sicherheitssystem (18) für eine Elektrosäge nach Patentanspruch 4, bei welchem der digitale kapazitive Schaltkreis dazu ausgestaltet ist, eine Kapazitanz im Bereich von ungefähr 50 pF bis ungefähr 200 pF zu erfassen.

7. Sicherheitssystem (18) für eine Elektrosäge nach Patentanspruch 4, bei welchem der digitale kapazitive Schaltkreis dazu ausgestaltet ist, eine Kapazitanz von ungefähr 100 pF zu erfassen.

8. Sicherheitssystem (18) für eine Elektrosäge nach Patentanspruch 4, bei welchem der digitale kapazitive Schaltkreis einen Kondensator beinhaltet, der aus der Gruppe ausgewählt ist, die aus Keramik, Folie, Elektrofolie, Aluminium und Tantal besteht.

9. Sicherheitssystem (18) für eine Elektrosäge nach Patentanspruch 1, bei welchem die Schutzbarriere (44) als kapazitive Sonde arbeitet, um nach einer auswählbaren Kapazitanzstufe zu suchen.

10. Sicherheitssystem (18) für eine Elektrosäge nach Patentanspruch 1, bei welchem das Steuersystem (26) dazu ausgestaltet ist, die Bewegung des Sägeblatts (40) beim Empfang des Erfassungssignals anzuhalten.

11. Sicherheitssystem (18) für eine Elektrosäge nach Patentanspruch 1, bei welchem das Steuersystem (26) einen Bremswiderstand beinhaltet, der mit dem Motor (16) betätigbar ist, um die Bewegung des Sägeblatts (40) anzuhalten.

12. Sicherheitssystem (18) für eine Elektrosäge nach Patentanspruch 11, bei welchem das Steuersystem (26) dazu ausgestaltet ist, den Bremswiderstand in Reihe mit einer Ankerspule des Motors (16) einzufügen, um **dadurch** die Bewegung des Sägeblatts (40) anzuhalten.

13. Sicherheitssystem (18) für eine Elektrosäge nach Patentanspruch 1, bei welchem das Steuersystem (26) einen Verstärkerschaltkreis beinhaltet, um den Strom in dem Motor (16) umzudrehen und **dadurch** die Bewegung des Sägeblatts (40) anzuhalten.

14. Sicherheitssystem (18) für eine Elektrosäge nach Patentanspruch 1, bei welchem das Steuersystem (26) dazu ausgestaltet ist, das Sägeblatt (40) außer Betrieb zu setzen, wenn das Sägeblatt (40) sich in einem aktiven Modus befindet.

15. Sicherheitssystem (18) für eine Elektrosäge nach Patentanspruch 1, bei welchem das Steuersystem (26) dazu ausgestaltet ist, beim Empfang des Erfassungssignals ein Warnsignal auszugeben.

16. Sicherheitssystem (18) für eine Elektrosäge nach Patentanspruch 15, bei welchem das Warnsignal ein Licht ist.

17. Sicherheitssystem (18) für eine Elektrosäge nach Patentanspruch 15, bei welchem das Warnsignal ein hörbares Geräusch ist.

18. Sicherheitssystem (18) für eine Elektrosäge nach Patentanspruch 1, bei welchem das Steuersystem (26) dazu ausgestaltet ist, die Energieversorgung des Motors (16) zu unterbrechen.

19. Sicherheitssystem (18) für eine Elektrosäge nach Patentanspruch 1, bei welchem das Steuersystem (26) dazu ausgestaltet ist, das Sägeblatt (40) aus einem Schneidbereich zu bewegen.

20. Sicherheitssystem (18) für eine Elektrosäge nach Patentanspruch 1, bei welchem das Steuersystem (26) selektiv dazu ausgestaltet ist, ein Warnsignal auszugeben, die Bewegung des Sägeblatts (40) anzuhalten oder das Sägeblatt (40) aus dem Schneidbereich heraus zu bewegen, wenn das Erfassungssignal empfangen wird.

21. Sicherheitssystem (18) für eine Elektrosäge nach Patentanspruch 20, bei welchem das Steuersystem (26) ein Warnsignal ausgibt und die Bewegung des Sägeblatts (40) anhält.

22. Sicherheitssystem (18) für eine Elektrosäge nach Patentanspruch 21, bei welchem das Steuersystem (26) gleichzeitig ein Warnsignal ausgibt und die Bewegung des Sägeblatts (40) anhält.

23. Sicherheitssystem (18) für eine Elektrosäge nach Patentanspruch 1, bei welchem das Steuerungssystem (26) dazu ausgestaltet ist, beim Empfangen des Erfassungssignals selektiv zumindest zwei gleichzeitige Aktionen zu bewirken, die ausgewählt sind aus der Gruppe, die aus dem Ausgeben eines Warnsignals, dem Anhalten der Bewegung des Sägeblatts (40) und dem Bewegen des Sägeblatts (40) aus einem Schneidbereich besteht.

24. Maschine (10) zum Zersägen eines Werkstücks mit einem Sicherheitssystem (18) nach einem der Patentansprüche 1 bis 23.

25. Maschine (10) nach Patentanspruch 24, bei welcher der Motor (16) das Schneidwerkzeug (14) dreht, während sich das Schneidwerkzeug (14) zumindest teilweise in den Schneidbereich hinein bewegt, und wobei das Steuersystem (26) dazu ausgestaltet ist, die Drehung des Schneidwerkzeugs (14) anzuhalten.

26. Maschine (10) nach Patentanspruch 25, bei welcher das Steuersystem (26) einen ersten Bremsmechanismus zum Anhalten der Bewegung des Schneidwerkzeugs (14) in den Schneidbereich und einen zweiten Bremsmechanismus zum Anhalten der Drehung des Schneidwerkzeugs (14) beinhaltet.

27. Maschine (10) nach Patentanspruch 24, weiter mit einer operativen Struktur (12), die dazu ausgestaltet ist, das Schneidwerkzeug (14) mit der Stützstruktur zu koppeln, wobei die operative Struktur (12) relativ zu der Stützstruktur selektiv beweglich ist, um das Schneidwerkzeug (14) in den Schneidbereich hinein zu bewegen, und wobei das Steuersystem (26) dazu ausgestaltet ist, die Bewegung der operativen Struktur (12) relativ zu der Stützstruktur bei der Erfassung der engen Annäherung mittels des Erfassungssystems (22) anzuhalten.

28. Maschine (10) nach Patentanspruch 24, weiter mit einem Sägeblattschutz, wobei der ausgewählte Bereich des Werkzeugs (14) der Sägeblattschutz ist:

29. Maschine (10) nach Patentanspruch 27, wobei die Maschine (10) eine Säge ist und das Steuersystem (26) dazu ausgestaltet ist, die Aufwärtsbewegung der operativen Struktur (12) anzuhalten.

30. Verfahren zum Erfassen einer engen Annäherung zwischen einem Benutzer und einem Werkzeug (14), das einen Motor (16) zum Antreiben eines Sägeblatts (40) hat und eine Schutzbarriere (44) zwischen dem Sägeblatt (40) und einem Benutzer, wobei die Kapazitanz des Benutzers erfasst wird,
**dadurch gekennzeichnet, dass**
eine enge Annäherung zwischen dem Benutzer und der Schutzbarriere (44) mittels einer kapazitiven Sonde erfasst wird, welche mit der besagten Schutzbarriere (44) gekoppelt ist.

## Revendications

1. Système de sécurité pour scie mécanique (18), comprenant :
a. un moteur (16) configuré pour entraîner une lame de coupe (40),
b. une barrière de protection (44) placée entre la lame de coupe (40) et un utilisateur,
c. un système de détection (22) agencé et conçu pour détecter la capacité de l'utilisateur et, après détection, fournir un signal de détection, et
d. un système de commande (26) qui reçoit le signal de détection,
**caractérisé en ce que** le système de détection (22) est couplé à la barrière de protection (44) de manière à détecter une proximité rapprochée entre l'utilisateur et la barrière de protection (44).

2. Système de sécurité pour scie mécanique (18) selon la revendication 1, dans lequel la barrière de protection (44) est un carter de lame.

3. Système de sécurité pour scie mécanique (18) selon la revendication 1, dans lequel la barrière dé protection (44) est une plaque à gorge.

4. Système de sécurité pour scie mécanique (18) selon la revendication 1, dans lequel le système de détection (22) comprend un circuit capacitif numérique qui mesure la capacité de l'utilisateur.

5. Système de sécurité pour scie mécanique (18) selon la revendication 4, dans lequel le circuit capacitif numérique est configuré pour mesurer une capacité dans l'intervalle d'environ 1 pF à environ 500 pF.

6. Système de sécurité pour scie mécanique (18) selon la revendication 4, dans lequel le circuit capacitif numérique est configuré pour mesurer une capacité dans l'intervalle d'environ 50 pF à environ 200 pF.

7. Système de sécurité pour scie mécanique (18) selon la revendication 4, dans lequel le circuit capacitif numérique est configuré pour mesurer une capacité d'environ 100 pF.

8. Système de sécurité pour scie mécanique (18) selon la revendication 4, dans lequel le circuit capacitif numérique comprend un condensateur choisi dans l'ensemble comprenant les condensateurs en céramique, à film, à film de puissance, à l'aluminium, et au tantale.

9. Système de sécurité pour scie mécanique (18) selon la revendication 1, dans lequel la barrière de protection (44) fait office de sonde capacitive pour rechercher un niveau de capacité sélectionnable.

10. Système de sécurité pour scie mécanique (18) selon la revendication 1, dans lequel le système de commande (26) est adapté pour arrêter le mouvement de la lame de coupe (40) à la réception du signal de détection.

11. Système de sécurité pour scie mécanique (18) selon la revendication 1, dans lequel le système de commande (26) comprend une résistance de freinage qui s'utilise avec le moteur (16) pour arrêter le mouvement de la lame de coupe (40).

12. Système de sécurité pour scie mécanique (18) selon la revendication 11, dans lequel le système de commande (26) est adapté pour insérer la résistance de freinage en série avec une bobine d'armature du moteur (16), arrêtant ainsi le mouvement de la lame de coupe (40).

13. Système de sécurité pour scie mécanique (18) selon la revendication 1, dans lequel le système de commande (26) comprend un circuit amplificateur pour inverser le courant dans le moteur (16), arrêtant ainsi le mouvement de la lame de coupe (40).

14. Système de sécurité pour scie mécanique (18) selon la revendication 1, dans lequel le système de commande (26) est adapté pour désactiver la lame de coupe (40) lorsque la lame de coupe (40) est dans un mode actif.

15. Système de sécurité pour scie mécanique (18) selon la revendication 1, dans lequel le système de commande (26) est adapté pour fournir un signal d'alarme lors de la réception du signal de détection.

16. Système de sécurité pour scie mécanique (18) selon la revendication 15, dans lequel le signal d'alarme est une lumière.

17. Système de sécurité pour scie mécanique (18) selon la revendication 15, dans lequel le signal d'alarme est un son audible.

18. Système de sécurité pour scie mécanique (18) selon la revendication 1, dans lequel le système de commande (26) est adapté pour couper l'alimentation électrique du moteur (16).

19. Système de sécurité pour scie mécanique (18) selon la revendication 1, dans lequel le système de commande (26) est adapté pour éloigner la lame de coupe (40) d'une zone de coupe.

20. Système de sécurité pour scie mécanique (18) selon la revendication 1, dans lequel le système de commande (26) est sélectivement adapté pour fournir un signal d'alarme, pour arrêter le mouvement de la lame de coupe (40), ou éloigner la lame de coupe (40) d'une zone de coupe, lors de la réception du signal de détection.

21. Système de sécurité pour scie mécanique (18) selon la revendication 20, dans lequel le système de commande (26) fournit un signal d'alarme et arrête le mouvement de la lame de coupe (40).

22. Système de sécurité pour scie mécanique (18) selon la revendication 21, dans lequel le système de commande (26) fournit un signal d'alarme et arrête le mouvement de la lame de coupe (40) de façon simultanée.

23. Système de sécurité pour scie mécanique (18) selon la revendication 1, dans lequel, à la réception du signal de détection, le système de commande (26) est sélectivement adapté pour fournir au moins deux actions simultanées choisies dans l'ensemble comprenant l'émission d'un signal d'alarme, l'arrêt du mouvement de, la lame de coupe (40), et l'éloignement de la lame de coupe (40) d'une zone de coupe.

24. Machine (10) pour couper une pièce, comprenant un système de sécurité (18) conforme à l'une quelconque des revendications 1 à 23.

25. Machine (10) selon la revendication 24, dans laquelle le moteur (16) fait tourner l'outil de coupe (14) en même temps que l'outil de coupe (14) se déplace au moins partiellement dans la zone de coupe, et où le système de commande (26) est adapté pour arrêter la rotation de l'outil de coupe (14).

26. Machine (10) selon la revendication 25, dans laquelle le système de commande (26) comprend un premier mécanisme de frein adapté pour arrêter le mouvement de l'outil de coupe (14) dans la zone de coupe, et un second mécanisme de frein adapté pour arrêter la rotation de l'outil de coupe (14).

27. Machine (10) selon la revendication 24, comprenant en outre une structure fonctionnelle (12) adaptée pour accoupler l'outil de coupe (14) à la structure de support, la structure fonctionnelle (12) étant mobile sélectivement par rapport à la structure de support pour déplacer l'outil de coupe (14) dans la zone de coupe, et le système de commande (26) étant adapté pour arrêter le mouvement de la structure fonctionnelle (12) par rapport à la structure de support lors de la détection d'une proximité rapprochée par le système de détection (22).

28. Machine (10) selon la revendication 24, comprenant en outre un carter de lame, la partie choisie de l'outil (24) étant le carter de lame.

29. Machine (10) selon la revendication 27, la machine (10) étant une scie à coupe verticale, et le système de commande (26) étant adapté pour arrêter le mouvement vers le haut de la structure fonctionnelle (12).

30. Procédé de détection d'une proximité rapprochée entre un utilisateur et un outil (14) comportant un moteur (16) pour entraîner une lame (40) et une barrière de protection (44) placée entre la lame de coupe (40) et un utilisateur, dans lequel la capacité de l'utilisateur est détectée, **caractérisé en ce qu'**une proximité rapprochée entre l'utilisateur et ladite barrière de protection (44) est détectée au moyen d'une sonde capacitive couplée à ladite barrière de protection (44).
